# EUROPEAN PATENT APPLICATION

(11) **EP 4 640 510 A1**
(43) Date of publication of application: **29.10.2025**
(21) Application number: 23905164.2
(22) Date of filing: 09.06.2023
(51) Int. Cl.: B60W 30/182

(54) **VEHICLE CONTROL METHOD, STORAGE MEDIUM, AND VEHICLE**

(30) Priority: 22.12.2022 CN 202211667200
(71) Applicant: BYD Company Limited, Shenzhen, Guangdong 518118 (CN)
(72) Inventor: LIAN, Yubo, Shenzhen, Guangdong 518118 (CN); LING, Heping, Shenzhen, Guangdong 518118 (CN); SHI, Mingchuan, Shenzhen, Guangdong 518118 (CN); WANG, Hongxia, Shenzhen, Guangdong 518118 (CN); YUAN, Yuexu, Shenzhen, Guangdong 518118 (CN)
(74) Representative: Aldridge, Henry Alexander
(86) International application number: PCT/CN2023/099528
(87) International publication number: WO 2024/130976

(57) **Abstract**

A vehicle control method, a storage medium, and a vehicle. The method comprises: in response to an operation of a driver turning on a racing track mode, acquiring the vehicle speed and travel stability of a vehicle; at least according to the vehicle speed and the travel stability, determining whether the vehicle meets a racing track mode starting condition; and when it is determined that the vehicle meets the racing track mode starting condition, controlling the vehicle to enter the racing track mode.

## Description

### CROSS-REFERENCE TO RELATED APPLICATIONS

The present disclosure claims priority to Chinese Patent Application No. 202211667200.3, filed with the China National Intellectual Property Administration on December 22, 2022 and entitled "VEHICLE CONTROL METHOD, STORAGE MEDIUM, AND VEHICLE", which is incorporated herein by reference in its entirety.

### FIELD

The present disclosure relates to the technical field of vehicle control, and more specifically, to a vehicle control method, a storage medium, and a vehicle.

### BACKGROUND

A driving performance of an electric vehicle at the present stage is based on economy, and satisfies a demand of a driver for continuous mileage as much as possible. In addition, some electric vehicles on the market have a driving function in a racing driving mode, so that the vehicles can output according to a maximum output capability, to satisfy the demand of the driver for the racing driving mode.

In an existing electric vehicle, a racing mode is enabled according to manners such as an accelerator pedal bottom switch, a center console switch, and a physical key of the vehicle. Velocity information and a vehicle travel stability are not considered. As a result, potential safety hazards of travel of the vehicle in a severe environment after the racing mode is enabled are increased. For example, after the racing mode is enabled for the vehicle on a snowy road, the vehicle may start at a very large torque, resulting in reduced stability of the vehicle.

### SUMMARY

An objective of the present disclosure is to provide a vehicle control method, a storage medium, and a vehicle. A vehicle is controlled to enter a racing mode with reference to a velocity and a travel stability of the vehicle, thereby reducing potential safety hazards when the vehicle is in the racing mode.

To achieve the foregoing objective, according to a first aspect, the present disclosure provides a vehicle control method. The vehicle control method includes the following steps.

A velocity and a travel stability of a vehicle are obtained in response to an operation of enabling a racing mode.

Whether the vehicle satisfies a racing mode enabling condition is determined at least according to the velocity and the travel stability.

The vehicle is controlled to enter the racing mode in a case that the vehicle satisfies the racing mode enabling condition.

Optionally, the step of obtaining a velocity and a travel stability of a vehicle includes the following operations.

An accelerator pedal aperture, a velocity, a steering angle, a yaw speed, and a lateral acceleration of the vehicle are obtained.

A travel stability of the vehicle is determined by using a vehicle linear dynamic model according to the accelerator pedal aperture, the velocity, the steering angle, the yaw speed, and the lateral acceleration. The travel stability includes at least one of a sideslip angle, a front wheel slip angle, and a sideslip angle speed of the vehicle.

Optionally, the travel stability includes a sideslip angle of the vehicle. The step of determining, at least according to the velocity and the travel stability, whether the vehicle satisfies a racing mode enabling condition includes the following operations.

It is determined that the vehicle satisfies the racing mode enabling condition in a case that the velocity is greater than a velocity threshold, the sideslip angle is less than a first sideslip angle threshold, and the vehicle has no fault signal.

Optionally, the vehicle control method further includes the following steps.

An electronic stability system of the vehicle is degraded on in response to an on signal of the electronic stability system after the vehicle enters the racing mode, where a trigger sensitivity of the electronic stability system in a degraded on state is greater than a trigger sensitivity of the electronic stability system in a normal on state, and/or an execution strength of the electronic stability system in the degraded on state is less than an execution strength of the electronic stability system in the normal state.

Optionally, the vehicle control method further includes the following steps.

In response to the vehicle entering the racing mode, a motor control unit of the vehicle is controlled to output a maximum torque if the electronic stability system of the vehicle is in an off state.

And a battery management system of the vehicle is controlled to output a maximum discharge power.

Optionally, the operation of enabling the racing mode includes at least one of the following:

The accelerator pedal aperture of the vehicle is continuously greater than a first aperture threshold and exceeds a first duration threshold.

A center console racing mode switch of the vehicle is in an on state.

A racing mode physical control key of the vehicle is triggered.

Optionally, the vehicle control method further includes the following steps.

After the vehicle enters the racing mode, whether the travel stability of the vehicle satisfies a racing mode disabling condition is determined if the obtained accelerator pedal aperture of the vehicle is continuously less than a second aperture threshold and exceeds a second preset duration.

The vehicle is kept in the racing mode in a case that the travel stability of the vehicle does not satisfy the racing mode disabling condition.

Optionally, the travel stability includes a sideslip angle, a front wheel slip angle, and a sideslip angle speed. The step of determining whether the travel stability of the vehicle satisfies a racing mode disabling condition includes the following operations.

If the sideslip angle is greater than a second sideslip angle threshold, or the front wheel slip angle is greater than a front wheel slip angle threshold, or the sideslip angle speed is greater than a sideslip angle speed threshold, it is determined that the vehicle satisfies the racing mode disabling condition.

According to a second aspect, the present disclosure provides a vehicle control apparatus. The apparatus includes:
an obtaining module, configured to obtain a velocity and a travel stability of a vehicle in response to an operation of a driver enabling a racing mode;
a determining module, configured to determine, at least according to the velocity and the travel stability, whether the vehicle satisfies a racing mode enabling condition; and
a control module, configured to control the vehicle to enter the racing mode in a case that the vehicle satisfies the racing mode enabling condition.

According to a third aspect, the present disclosure provides a storage medium, having a computer program stored thereon. The program, when executed by a processor, implements the steps of the method according to the first aspect.

According to a fourth aspect, the present disclosure provides a vehicle, including:
a memory, having a computer program stored thereon; and
a processor, configured to execute the computer program in the memory, to implement the steps of the method according to the first aspect.

According to the foregoing technical solution, in the present disclosure, whether a vehicle satisfies a racing mode enabling condition is determined with reference to a velocity and a travel stability of the vehicle. When it is determined that the vehicle satisfies the racing mode enabling condition, the vehicle is controlled to enter a racing mode, so as to avoid that the vehicle is unstable due to an excessively large starting torque in a travel process in a severe environment, thereby improving driving safety of the vehicle.

Other features and advantages of the present disclosure will be described in detail in the following detailed description part. The additional aspects and advantages of the present disclosure will be provided in the following description, some of which will become apparent from the following description or may be learned from practices of the present disclosure.

### BRIEF DESCRIPTION OF THE DRAWINGS

The foregoing and/or additional aspects and advantages of the present disclosure become apparent and comprehensible in the description made with reference to the following accompanying drawings, where:
FIG. 1 is a flowchart of a vehicle control method according to an embodiment of the present disclosure;
FIG. 2 is another flowchart of a vehicle control method according to an embodiment of the present disclosure;
FIG. 3 is a block diagram of a vehicle control apparatus according to an embodiment of the present disclosure; and
FIG. 4 is a block diagram of an in-vehicle system of a vehicle according to an embodiment of the present disclosure.

### DETAILED DESCRIPTION

Specific implementations of the present disclosure are described in detail below with reference to the accompanying drawings. It should be understood that the specific implementations described herein are merely used to describe and explain the present disclosure, but are not intended to limit the present disclosure.

It should be noted that all actions of obtaining a signal, information, or data in the present disclosure are performed under the premise of complying with a data protection regulation policy corresponding to a country and in a case of being authorized by an owner of a corresponding apparatus.

As stated in the background, an existing electric vehicle is controlled to enter a racing mode according to an accelerator pedal switch angle of the vehicle, a center console switch state, and whether a physical key is triggered, increasing potential safety hazards when the vehicle travels in a severe environment after the racing mode is enabled.

In addition, the existing electric vehicle turns off an electronic stability control system after the racing mode is enabled. If the vehicle is seriously unstable in the racing mode, the electronic stability system cannot work, so that driving safety cannot be ensured.

In addition, in the existing electric vehicle, the racing mode is disabled according to an accelerator pedal aperture and duration. In consideration of a real-time change of a vehicle stability state, driving duration and driving feelings in the racing mode are affected.

In view of this, the present disclosure provides a vehicle control method, a storage medium, and a vehicle. A vehicle is controlled to enter a racing mode with reference to a velocity and a travel stability of the vehicle, thereby reducing potential safety hazards when the vehicle travels in the racing mode.

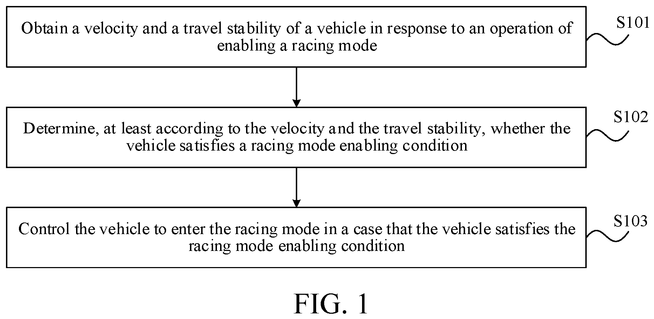

FIG. 1 exemplarily shows a vehicle control method according to an embodiment of the present disclosure. The vehicle control method is applied to, for example, an electric vehicle. The method includes the following steps.

In step S101, a velocity and a travel stability of a vehicle are obtained in response to an operation of enabling a racing mode.

Exemplarily, the velocity of the vehicle and parameters related to the travel stability of the vehicle, for example, information such as a steering angle, a yaw speed, and a lateral acceleration may be obtained through an in-vehicle sensor.

In step S102, whether the vehicle satisfies a racing mode enabling condition is determined at least according to the velocity and the travel stability.

Exemplarily, the information such as the velocity, the steering angle, the yaw speed, and the lateral acceleration is filtered, to reduce impact of noise on a determining result, and improve reliability of the determining result.

The filtering processing may be implemented in an existing filtering manner, such as mean filtering, median filtering, and Kakman filtering.

In step S103, the vehicle is controlled to enter the racing mode when it is determined that the vehicle satisfies the racing mode enabling condition.

In the present disclosure, a velocity and a travel stability of a vehicle that are captured by using an in-vehicle sensor module are filtered, whether the vehicle satisfies a racing mode enabling condition is determined according to the filtered velocity and travel stability, and in a case that the racing mode enabling condition is satisfied, the vehicle is controlled to enter a racing mode, thereby reducing potential safety hazards of the vehicle in the racing mode. In addition, whether the vehicle is in the racing mode is controlled according to the velocity and the travel stability, thereby avoiding enabling the racing mode when the vehicle is in a bad vehicle condition, and improving safety in a driving process.

To make a person skilled in the art understand the vehicle control method provided in the present disclosure, the following describes the foregoing steps in detail by using examples.

In a feasible embodiment, in step S101, the step of obtaining a velocity and a travel stability of a vehicle includes the following operations.

An accelerator pedal aperture, a velocity, a steering angle, a yaw speed, and a lateral acceleration of the vehicle are obtained.

A travel stability of the vehicle is determined by using a vehicle linear dynamic model according to the accelerator pedal aperture, the velocity, the steering angle, the yaw speed, and the lateral acceleration. The travel stability includes at least one of a sideslip angle, a front wheel slip angle, and a sideslip angle speed of the vehicle.

Exemplarily, the sideslip angle may be directly measured by using an in-vehicle sensor, or may be estimated according to the yaw speed and the steering angle.

The vehicle linear dynamic model is an existing vehicle dynamic model. This is not limited in the present disclosure.

**In** a feasible embodiment, in step S102, the travel stability includes a sideslip angle of the vehicle. The step of determining, at least according to the velocity and the travel stability, whether the vehicle satisfies a racing mode enabling condition includes the following operations.

It is determined that the vehicle satisfies the racing mode enabling condition in a case that the velocity is greater than a velocity threshold, the sideslip angle is less than a first sideslip angle threshold, and the vehicle has no fault signal.

Exemplarily, the velocity threshold and the first sideslip angle threshold may be preset according to a running state of the vehicle in the racing mode. This is not limited in the present disclosure.

For example, the velocity threshold is preset to V₁ and the first sideslip angle threshold is preset to B₁. In a case that the velocity V is greater than V₁, the sideslip angle is less than B₁, and the vehicle has no fault signal, it is determined that the vehicle satisfies the racing mode enabling condition.

**In** the present disclosure, whether a vehicle satisfies a racing mode enabling condition is determined according to information such as a velocity of the vehicle, a sideslip angle, and a vehicle fault signal, and the vehicle is controlled to enter a racing mode after the vehicle satisfies the racing mode enabling condition, thereby avoiding that the vehicle is unstable due to starting by using a relatively large torque, ensuring that the vehicle enables the racing mode in a safe condition, and improving driving safety.

In a feasible embodiment, the vehicle control method further includes the following steps.

An electronic stability system of the vehicle is degraded on in response to an on signal of the electronic stability system after the vehicle enters the racing mode, where a trigger sensitivity of the electronic stability system in a degraded on state is greater than a trigger sensitivity of the electronic stability system in a normal on state, and/or an execution strength of the electronic stability system in the degraded on state is less than an execution strength of the electronic stability system in the normal state.

For example, after the vehicle enters the racing mode, the electronic stability system of the vehicle generates an on signal when the vehicle is unstable. In response to the on signal of the electronic stability system of the vehicle, the trigger sensitivity of the electronic stability system is increased, and/or the execution strength of the electronic stability system is reduced, so that the trigger sensitivity of the electronic stability system in the racing mode is greater than the trigger sensitivity of the electronic stability system not in the racing mode, and/or the execution strength of the electronic stability system in the racing mode is less than the trigger sensitivity of the electronic stability system not in the racing mode, thereby degrading on the electronic stability system.

In the present disclosure, when a vehicle is in a racing mode, an electronic stability system is started, so that driving safety of the vehicle is improved while a driver experiences the racing mode.

In a feasible embodiment, the vehicle control method further includes the following steps.

In response to the vehicle entering the racing mode, a motor control unit of the vehicle is controlled to output a maximum torque if the electronic stability system of the vehicle is in an off state.

And a battery management system of the vehicle is controlled to output a maximum discharge power.

For example, for a two-wheeled vehicle having only one of a front motor control unit (F_MCU) or a rear motor control unit (R_MCU), in response to the vehicle entering a racing mode, a power chassis domain control unit (PDCU) transmits a torque control signal to the F_MCU or the R_MCU of the two-wheeled vehicle, so that the F_MCU or the R_MCU outputs a maximum capacity of torque according to the torque control signal.

For example, for a four-wheeled vehicle having both an F_MCU and an R_MCU, in response to the vehicle entering a racing mode, the PDCU transmits a torque control signal to both the F_MCU and the R_MCU of the four-wheeled vehicle, so that the F_MCU and the R_MCU output a maximum capacity of torque according to the torque control signal. Meanwhile, the PDCU transmits a discharge capacity control signal to a battery management system (BMS) of the vehicle, so that the BMS outputs power of a maximum discharge capacity according to the discharge capacity control signal.

In the present disclosure, when a vehicle is in a racing mode, a motor control unit of the vehicle is controlled to output a maximum torque, and a battery management system of the vehicle is controlled to output a maximum discharge power, so that a torque output of the vehicle is more aggressive, thereby improving driving experience of a driver.

In a feasible embodiment, in step S101, the operation of enabling the racing mode includes at least one of the following:
The accelerator pedal aperture of the vehicle is continuously greater than a first aperture threshold and exceeds a first duration threshold.

A center console racing mode switch of the vehicle is in an on state.

A racing mode physical control key of the vehicle is triggered.

Exemplarily, the racing mode may be enabled in three manners. In the first manner, a racing mode enabling signal is monitored by using a racing mode switch at the bottom of an accelerator pedal. The racing mode switch is installed at the bottom of the accelerator pedal. A detection circuit is disposed inside the racing mode switch. The detection circuit is connected to a PDCU of the vehicle. When a driver steps down the accelerator pedal, the racing mode switch is triggered. At this moment, the PDU monitors the racing mode enabling signal. In the second manner, a racing mode enabling signal is monitored by using a virtual switch on a center console. The virtual switch is disposed on the center console. The center console is connected to a center console entertainment system controller. After the driver presses the virtual switch, the center console entertainment system controller transmits the racing mode enabling signal to the PDCU. The PDCU monitors the racing mode enabling signal. In the third manner, a racing mode physical control key is used. A physical control key is disposed on the vehicle. The physical control key is connected to the PDCU by using a circuit. After the driver presses the physical control key, the PDCU detects, by using the circuit, that the physical key is pressed down. To be specific, the racing mode enabling signal is monitored.

In the present disclosure, a driver may enable a racing mode in any one of three manners according to driving habits, so as to enjoy the racing mode, thereby improving user experience.

After the vehicle enters the racing mode, if the vehicle is controlled to disable the racing mode according to only the duration in the racing mode, the vehicle already disables the racing mode when the driver does not fully encounter various performance states of the vehicle in the racing mode. Therefore, the vehicle needs to be controlled to disable the racing mode with reference to the travel stability of the vehicle.

In a feasible embodiment, the vehicle control method further includes the following steps.

After the vehicle enters the racing mode, whether the travel stability of the vehicle satisfies a racing mode disabling condition is determined if the obtained accelerator pedal aperture of the vehicle is continuously less than a second aperture threshold and exceeds a second preset duration.

The vehicle is kept in the racing mode in a case that the travel stability of the vehicle does not satisfy the racing mode disabling condition.

Exemplarily, the second aperture threshold is less than the first aperture threshold.

For example, the second preset duration is T₂ and the second aperture threshold is A₂. When the accelerator pedal aperture A of the vehicle is less than A₂ and the duration exceeds T₂, whether the travel stability of the vehicle satisfies the racing mode disabling condition is determined. The vehicle is kept in the racing mode in a case that the travel stability of the vehicle does not satisfy the racing mode disabling condition.

Duration for which the vehicle is in a racing mode enabling state is dynamically adjusted according to the stability of the vehicle in the present disclosure, to further improve driving feelings of the driver.

In a feasible embodiment, the travel stability includes a sideslip angle, a front wheel slip angle, and a sideslip angle speed. The step of determining whether the travel stability of the vehicle satisfies a racing mode disabling condition includes the following operations.

If the sideslip angle is greater than a second sideslip angle threshold, or the front wheel slip angle is greater than a front wheel slip angle threshold, or the sideslip angle speed is greater than a sideslip angle speed threshold, it is determined that the vehicle satisfies the racing mode disabling condition.

The second sideslip angle threshold is greater than the first sideslip angle threshold.

Exemplarily, the front wheel slip angle may be obtained by querying in a preset comparison table of the steering angle and the sideslip angle according to the steering angle.

For example, the current second sideslip angle threshold is B₂, the front wheel slip angle threshold is C₁, and the sideslip angle speed is ω₁. It is determined that the vehicle satisfies the racing mode disabling condition in a case that B is greater than B₂ or C is greater than C₁ or ω is greater than ω₁.

According to the vehicle control method provided in the present disclosure, whether a vehicle satisfies a racing mode enabling condition is determined with reference to a velocity and a travel stability of the vehicle, and the vehicle is controlled to enter a racing mode in a case that the racing mode enabling condition is satisfied, thereby avoiding that the vehicle is unstable due to starting by using a relatively large torque, ensuring that the vehicle enables the racing mode in a safe condition, and improving driving safety. After the vehicle enters the racing mode, with reference to a degraded on state of an electronic stability system, the driving safety of the vehicle is improved while a driver experiences the racing mode. Duration for which the vehicle is in a racing mode enabling state is dynamically adjusted according to the stability of the vehicle, to further improve driving feelings of the driver.

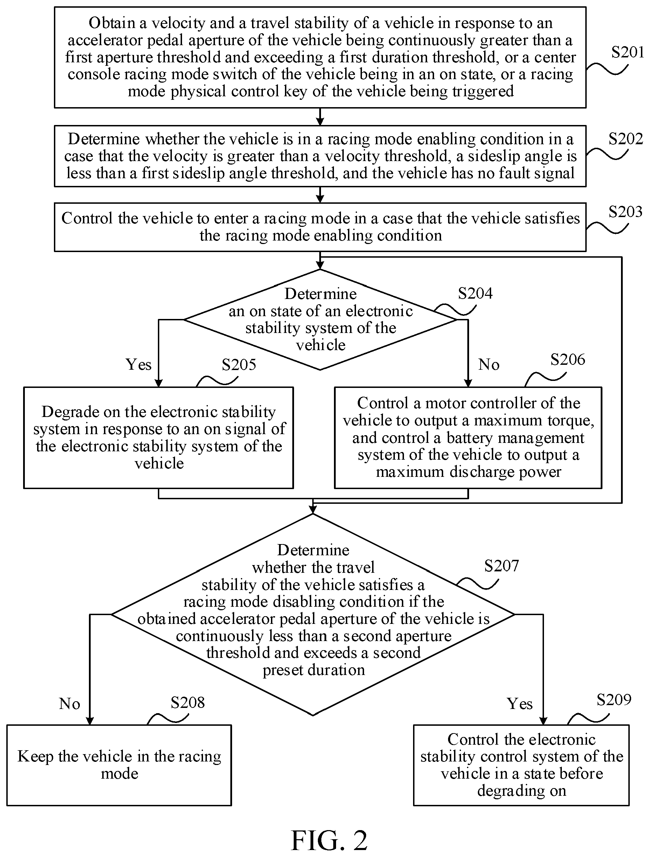

For example, referring to FIG. 2, the vehicle control method includes the following steps.

In step S201, a velocity and a travel stability of a vehicle are obtained in response to an accelerator pedal aperture of the vehicle being continuously greater than a first aperture threshold and exceeding a first duration threshold, or a center console racing mode switch of the vehicle being in an on state, or a racing mode physical control key of the vehicle being triggered.

The travel stability includes a sideslip angle, a front wheel slip angle, and a sideslip angle speed of the vehicle.

In step S202, whether the vehicle is in a racing mode enabling condition is determined in a case that the velocity is greater than a velocity threshold, a sideslip angle is less than a first sideslip angle threshold, and the vehicle has no fault signal.

In step S203, the vehicle is controlled to enter a racing mode in a case that the vehicle satisfies the racing mode enabling condition.

In step S204, an on state of an electronic stability system of the vehicle is determined.

In step S205, the electronic stability system is degraded on in response to an on signal of the electronic stability system of the vehicle if the electronic stability system of the vehicle is in the on state.

In step S206, if the electronic stability system of the vehicle is in an off state, a motor control unit of the vehicle is controlled to output a maximum torque, and a battery management system of the vehicle is controlled to output a maximum discharge power.

In step S207, whether the travel stability of the vehicle satisfies a racing mode disabling condition is determined if the obtained accelerator pedal aperture of the vehicle is continuously less than a second aperture threshold and exceeds a second preset duration.

In step S208, the vehicle is kept in the racing mode if the travel stability of the vehicle does not satisfy the racing mode disabling condition.

In step S209, the electronic stability control system of the vehicle is controlled in a state before degrading on if the travel stability of the vehicle satisfies the racing mode disabling condition.

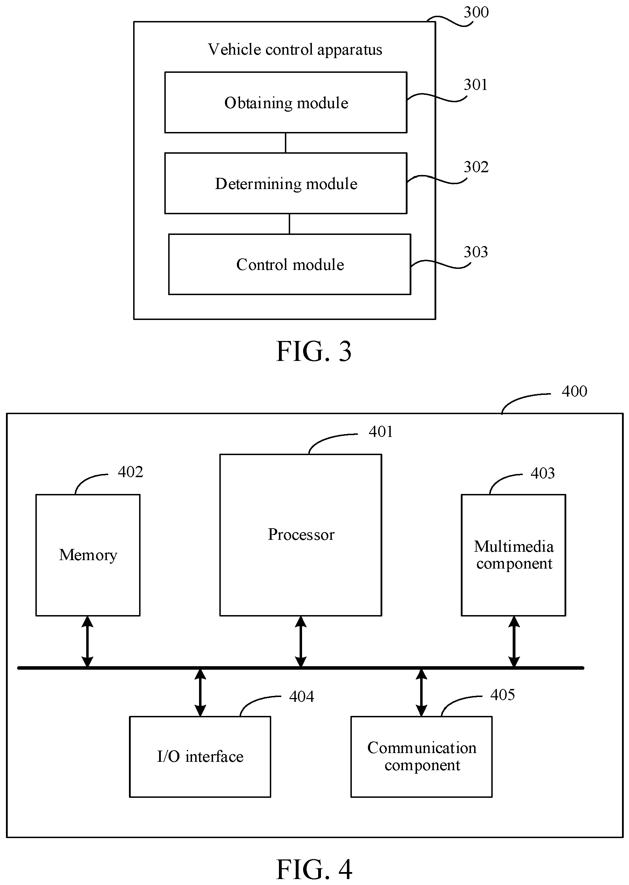

Based on a same inventive concept, the present disclosure further provides a vehicle control apparatus. Referring to FIG. 3, the apparatus 300 includes an obtaining module 301, a determining module 302, and a control module 303.

The obtaining module 301 is configured to obtain a velocity and a travel stability of a vehicle in response to an operation of enabling a racing mode.

The determining module 302 is configured to determine, at least according to the velocity and the travel stability, whether the vehicle satisfies a racing mode enabling condition.

The control module 303 is configured to control the vehicle to enter the racing mode in a case that the vehicle satisfies the racing mode enabling condition.

In the present disclosure, whether a vehicle satisfies a racing mode enabling condition is determined with reference to a velocity and a travel stability of the vehicle, and the vehicle is controlled to enter a racing mode in a case that the racing mode enabling condition is satisfied, thereby avoiding that the vehicle is unstable due to starting by using a relatively large torque, ensuring that the vehicle enables the racing mode in a safe condition, and improving driving safety. After the vehicle enters the racing mode, with reference to a degraded on state of an electronic stability system, the driving safety of the vehicle is improved while a driver experiences the racing mode. Duration for which the vehicle is in a racing mode enabling state is dynamically adjusted according to the stability of the vehicle, to further improve driving feelings of the driver.

Further, the obtaining module 301 is further configured to obtain an accelerator pedal aperture, a velocity, a steering angle, a yaw speed, and a lateral acceleration of the vehicle.

A travel stability of the vehicle is determined by using a vehicle linear dynamic model according to the accelerator pedal aperture, the velocity, the steering angle, the yaw speed, and the lateral acceleration. The travel stability includes at least one of a sideslip angle, a front wheel slip angle, and a sideslip angle speed of the vehicle.

Further, the determining module 302 is further configured to determine that the vehicle satisfies the racing mode enabling condition in a case that the velocity is greater than a velocity threshold, the sideslip angle is less than a first sideslip angle threshold, and the vehicle has no fault signal. The travel stability includes a sideslip angle of the vehicle.

Further, the control module 303 is further configured to degrade on an electronic stability system of the vehicle in response to an on signal of the electronic stability system after the vehicle enters the racing mode, where a trigger sensitivity of the electronic stability system in a degraded on state is greater than a trigger sensitivity of the electronic stability system in a normal on state, and/or an execution strength of the electronic stability system in the degraded on state is less than an execution strength of the electronic stability system in the normal state.

Further, the determining module 302 is further configured to control, in response to the vehicle entering the racing mode, a motor control unit of the vehicle to output a maximum torque if the electronic stability system of the vehicle is in an off state.

And a battery management system of the vehicle is controlled to output a maximum discharge power.

Further, the operation of enabling the racing mode includes at least one of the following:
The accelerator pedal aperture of the vehicle is continuously greater than a first aperture threshold and exceeds a first duration threshold.

A center console racing mode switch of the vehicle is in an on state.

A racing mode physical control key of the vehicle is triggered.

Further, the determining module 302 is further configured to determine, after the vehicle enters the racing mode, whether the travel stability of the vehicle satisfies a racing mode disabling condition if the obtained accelerator pedal aperture of the vehicle is continuously less than a second aperture threshold and exceeds a second preset duration.

The control module 303 is further configured to keep the vehicle in the racing mode in a case that the travel stability of the vehicle does not satisfy the racing mode disabling condition.

Further, the determining module 302 is further configured to determine, if the sideslip angle is greater than a second sideslip angle threshold, or the front wheel slip angle is greater than a front wheel slip angle threshold, or the sideslip angle speed is greater than a sideslip angle speed threshold, that the vehicle satisfies the racing mode disabling condition. The travel stability includes a sideslip angle, a front wheel slip angle, and a sideslip angle speed.

For the apparatus in the foregoing embodiments, a specific manner in which each module performs an operation is already described in detail in the embodiments related to the method. Details are not described herein again.

Based on a same inventive concept, the present disclosure further provides a vehicle, including:
a memory, having a computer program stored thereon; and
a processor, configured to execute the computer program in the memory, to implement the steps of the foregoing vehicle control method.

In the present disclosure, whether a vehicle satisfies a racing mode enabling condition is determined with reference to a velocity and a travel stability of the vehicle, and the vehicle is controlled to enter a racing mode in a case that the racing mode enabling condition is satisfied, thereby avoiding that the vehicle is unstable due to starting by using a relatively large torque, ensuring that the vehicle enables the racing mode in a safe condition, and improving driving safety. After the vehicle enters the racing mode, with reference to a degraded on state of an electronic stability system, the driving safety of the vehicle is improved while a driver experiences the racing mode. Duration for which the vehicle is in a racing mode enabling state is dynamically adjusted according to the stability of the vehicle, to further improve driving feelings of the driver.

FIG. 4 is a block diagram of an in-vehicle system 400 of a vehicle according to an exemplary embodiment of the present disclosure. As shown in FIG. 4, the in-vehicle system 400 may include: a processor 401 and a memory 402. The in-vehicle system 400 may further include one or more of a multimedia component 403, an input/output (I/O) interface 404, and a communication component 405.

The processor 401 is configured to control overall operations of the in-vehicle system 400, to complete all or some steps of the foregoing vehicle control method. The memory 402 is configured to store various types of data to support operations on the in-vehicle system 400. The data may include, for example, an instruction of any application or method to be operated on the in-vehicle system 400, and data related to an application, such as contact data, a received and transmitted message, a picture, an audio, and a video. The memory 402 may be implemented by any type of volatile or non-volatile storage device or a combination thereof, such as a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk, or an optical disc. The multimedia component 403 may include a screen and an audio component. The screen may be, for example, a touchscreen. The audio component is configured to output and/or input an audio signal. For example, the audio component may include a microphone. The microphone is configured to receive an external audio signal. The received audio signal may be further stored in the memory 402 or transmitted by using the communication component 405. The audio component further includes at least one speaker, configured to output the audio signal. The I/O interface 404 provides an interface between the processor 401 and other interface modules. The other interface modules may be keyboards, mice, buttons, or the like. The buttons may be virtual buttons or physical buttons. The communication component 405 is configured for wired or wireless communication between the in-vehicle system 400 and other devices. The wireless communication may be, for example, Wi-Fi, Bluetooth, near field communication (NFC), 2G, 3G, 4G, NB-IOT, eMTC, or other 5G, or a combination of one or more of the foregoing. This is not limited herein. Therefore, correspondingly, the communication component 405 may include: a Wi-Fi module, a Bluetooth module, an NFC module, and the like.

In an exemplary embodiment, the in-vehicle system 400 may be implemented by using one or more application specific integrated circuits (ASIC), digital signal processors (DSP), digital signal processing devices (DSPD), programmable logic devices (PLD), field programmable gate arrays (FPGA), controllers, microcontrollers, microprocessors, or other electronic elements, to perform the foregoing vehicle control method.

In another exemplary embodiment, a computer-readable storage medium including a program instruction is further provided. The program instruction, when executed by a processor, implements the steps of the foregoing vehicle control method. For example, the computer-readable storage medium may be the memory 402 including the program instruction. The program instruction may be executed by the processor 401 of the in-vehicle system 400 to complete the foregoing vehicle control method.

In another exemplary embodiment, a computer program product is further provided. The computer program product includes a computer program that can be executed by a programmable apparatus. The computer program has a code portion for performing, when executed by the programmable apparatus, the foregoing vehicle control method.

The preferred implementations of the present disclosure are described in detail above with reference to the accompanying drawings. However, the present disclosure is not limited to the specific details in the foregoing implementations. Multiple simple deformations may be made to the technical solution of the present disclosure within a range of the technical concept of the present disclosure. These simple deformations fall within the protection scope of the present disclosure.

In addition, it should be noted that the specific technical features described in the foregoing specific implementations may be combined in any proper manner in a case without conflict. To avoid unnecessary repetition, various possible combination manners are not described in the present disclosure.

In addition, different implementations of the present disclosure may alternatively be arbitrarily combined without departing from the idea of the present disclosure. These combinations shall still be regarded as content disclosed in the present disclosure.

## Claims

1. A vehicle control method, comprising:
obtaining a velocity and a travel stability of a vehicle in response to an operation of enabling a racing mode;
determining, at least according to the velocity and the travel stability, whether the vehicle satisfies a racing mode enabling condition; and
controlling the vehicle to enter the racing mode in a case that the vehicle satisfies the racing mode enabling condition.

2. The vehicle control method according to claim 1, wherein the obtaining a velocity and a travel stability of a vehicle comprises:
obtaining an accelerator pedal aperture, a velocity, a steering angle, a yaw speed, and a lateral acceleration of the vehicle; and
determining a travel stability of the vehicle by using a vehicle linear dynamic model according to the accelerator pedal aperture, the velocity, the steering angle, the yaw speed, and the lateral acceleration, the travel stability comprising at least one of a sideslip angle, a front wheel slip angle, and a sideslip angle speed of the vehicle.

3. The vehicle control method according to claim 1 or 2, wherein the travel stability comprises a sideslip angle of the vehicle, and the determining, at least according to the velocity and the travel stability, whether the vehicle satisfies a racing mode enabling condition comprises:
determining that the vehicle satisfies the racing mode enabling condition in a case that the velocity is greater than a velocity threshold, the sideslip angle is less than a first sideslip angle threshold, and the vehicle has no fault signal.

4. The vehicle control method according to any one of claims 1 to 3, further comprising:
degrading on an electronic stability system of the vehicle in response to an on signal of the electronic stability system after the vehicle enters the racing mode, wherein a trigger sensitivity of the electronic stability system in a degraded on state is greater than a trigger sensitivity of the electronic stability system in a normal on state, and/or an execution strength of the electronic stability system in the degraded on state is less than an execution strength of the electronic stability system in the normal state.

5. The vehicle control method according to any one of claims 1 to 4, further comprising:
controlling, in response to the vehicle entering the racing mode, a motor control unit of the vehicle to output a maximum torque if the electronic stability system of the vehicle is in an off state;
and controlling a battery management system of the vehicle to output a maximum discharge power.

6. The vehicle control method according to any one of claims 1 to 5, wherein the operation of enabling the racing mode comprises at least one of the following:
the accelerator pedal aperture of the vehicle is continuously greater than a first aperture threshold and exceeds a first duration threshold;
a center console racing mode switch of the vehicle is in an on state; and
a racing mode physical control key of the vehicle is triggered.

7. The vehicle control method according to any one of claims 1 to 6, further comprising:
determining, after the vehicle enters the racing mode, whether the travel stability of the vehicle satisfies a racing mode disabling condition if the obtained accelerator pedal aperture of the vehicle is continuously less than a second aperture threshold and exceeds a second preset duration; and
keeping the vehicle in the racing mode in a case that the travel stability of the vehicle does not satisfy the racing mode disabling condition.

8. The vehicle control method according to claim 7, wherein the travel stability comprises a sideslip angle, a front wheel slip angle, and a sideslip angle speed, and the determining whether the travel stability of the vehicle satisfies a racing mode disabling condition comprises:
determining, if the sideslip angle is greater than a second sideslip angle threshold, or the front wheel slip angle is greater than a front wheel slip angle threshold, or the sideslip angle speed is greater than a sideslip angle speed threshold, that the vehicle satisfies the racing mode disabling condition.

9. A non-transitory computer-readable storage medium, having a computer program stored thereon, the program, when executed by a processor, implementing the steps of the method according to any of claims 1 to 8.

10. A vehicle, comprising:
a memory, having a computer program stored thereon; and a processor, configured to execute the computer program in the memory, to implement the steps of the method according to any of claims 1 to 8.
